# EUROPEAN PATENT SPECIFICATION

(11) **EP 1 621 279 B1**
(45) Date of publication and mention of the grant of the patent: **20.06.2007**
(21) Application number: 04425572.7
(22) Date of filing: 29.07.2004
(51) Int. Cl.: B23K 9/028, B23K 37/02

(54) **Device for carrying out a synchronised relative rotation between a mechanical component and tools for processing the same, around eccentric axes**
Vorrichtung zum synchronisierten relativ rotativen Antrieb zwischen Werkzeugen und einem zu bearbeitenden Werkstück um exzentrische Achsen.
Appareil pour exécuter un mouvement relatif synchronisé entre un composant mécanique et des outils pour travailler ledit composant, autour d'axes excentriques.

(43) Date of publication of application: 01.02.2006
(73) Proprietor: Magneti Marelli Sistemi di Scarico S.p.A., 20011 Corbetta (IT)
(72) Inventor: Fargnoli, Raffaele, 86079 Venafrio (IT)
(74) Representative: Plebani, Rinaldo

(56) References cited:
- PATENT ABSTRACTS OF JAPAN vol. 0092, no. 97 (M-432), 25 November 1985 (1985-11-25) & JP 60 133983 A (TAKESHI KONDOU), 17 July 1985 (1985-07-17)
- PATENT ABSTRACTS OF JAPAN vol. 0092, no. 97 (M-432), 25 November 1985 (1985-11-25) & JP 60 133984 A (TAKESHI KONDOU), 17 July 1985 (1985-07-17)

## Description

The present invention concerns a device for carrying out a synchronised relative rotation between a mechanical component and tools for processing the same, around eccentric axes. In particular, the invention concerns a device for realising a component of an exhaust system of a vehicle engine, typically a silencer, by butt welding two pipes to a tubular casing, each corresponding to one of two eccentric axes of the component.

Such a device is known from JP60133983, which document discloses the closest prior art.

It is known that a fundamental component of the exhaust system of a vehicle engine is the silencer assembly and pipes for feeding and discharging the burnt gases; the silencer generally consists of a tubular casing, with axial symmetry, on which are butt welded, at the opposite front ends, the pipes for respectively discharging and feeding the burnt gases; these pipes are generally never positioned on the same axis as the axis of symmetry of the silencer/casing, but are offset with respect to it and with each other, even though they are parallel to the axis of the silencer/casing.

In order to make the two continuous weld seams with which the pipes are mechanically and hydraulically connected to the casing, in a fluid-tight way, tools are used, for example gas welding torches, which are rotated relatively with respect to the casing/pipes assembly to be welded.

However, as the pipes are offset with respect to each other, the welding operation must currently be carried out in two stages, on two different devices (commonly known in technical jargon as "lathes") or on the same device, set up each time a welding stage is carried out. This obviously involves high production costs and relatively long processing times.

A known solution, which allows both welds to be done at the same time, is based on the use of robots or machines with numerical control, which support the welding torches and simultaneously carry out both welding profiles. However, this solution involves high plant costs and, moreover, when the production batch varies, the robots or machines with numerical control must be reprogrammed, with consequent relatively long machine down times. JP60133983 shows a solution which is bulky and difficult to adapt to different offsets.
The aim of the present invention is to overcome the inconveniences described by providing an automatic or semiautomatic device with a limited cost of realisation and fitting, which can be set up in a short time and is able to make several welds simultaneously around several axes eccentric to each other, at the same time guaranteeing high reliability of operation and a low bulk of the plant.

More generally, an aim of the invention is to provide a device for performing a synchronised relative rotation between a mechanical component and tools for processing the same, around at least a first and a second axis, parallel to each other and eccentric.

According to the present invention, a device is therefore supplied as defined in claim 1.

In particular, the device in the invention is used to perform the rotation of tools such as welding torches with respect to a mechanical component, such as a silencer of the exhaust system of a vehicle engine, in order to carry out the butt welding of respective pipes to the casing of the silencer at a respective first and second axis, parallel to each other and eccentric. The device comprises:
- a support cradle with axial symmetry for the mechanical component, preferably open around the circumference, within which the mechanical component can be set, preferably radially from the outside, with its first axis coaxial with an axis of rotation of the cradle;
- means for rotating the cradle around its axis of rotation by at least 360°;
- first support means for a first tool suited to keep the first tool at a first radial distance from the first axis and second support means for a second tool suited to keep the second tool at a second radial distance from the second axis;
- means for rotating said second support means around the second axis, along a circumference having as its radius said second radial distance; and transmission means for transmitting a synchronised movement of rotation from the means for rotating the cradle to the means for rotating the second support means.

The means for rotating the cradle comprise a toothed wheel with external toothing held angularly integral by the cradle, the toothed wheel being interrupted along a circumferential stretch of a predetermined width so as to define a radial opening of the cradle for inserting the mechanical component in a support seat of the cradle; and a transmission belt or chain with internal and external toothing held around the cradle by a plurality of driving gears in such a way as to define a closed path having a substantially arched form having an intrados branch engaging on its own outside with the toothed wheel and an extrados branch engaging on its own inside, with at least one first pinion, which is motor-driven; the transmission belt or chain leaving the radial opening of the cradle completely free.

In this way it is possible, with only one motor, to activate simultaneously both the cradle which may be rotated for one or more complete turns even when it presents a circumferential interruption, and, synchronously, the support of a first torch; the support of the other torch can therefore be placed in a fixed position near the axis of rotation of the cradle, which coincides with the axis of a first pipe to be welded, while the support of the first torch may be placed near the axis of the second pipe to be welded, after which, while the cradle rotates, allowing welding of the first pipe to be carried out, the support of the first torch also turns, with combined movement, synchronously following the rotation of the silencer and, at the same time, rotating around the axis of the second pipe, welding it to the silencer.

The presence of a circumferential discontinuity in the cradle also allows very easy and rapid fitting of the mechanical component to be processed onto the device of the invention.

Advantageously, the means for rotating the second support means around the second axis include a crank and a transmission cascade, for example composed of gears connected by a toothed belt or chain, realised as a separate group; this group may be quickly replaced with quick coupling means; in this way, when the device in the invention must be fitted again, for a change of the production batch, for example to weld pipes on a different model of silencer, which are offset at a different centre distance, it will be sufficient to replace this group with a new group having simply the crank with different dimensions.

Alternatively, the assembly made up of the crank, gears and flexible transmission organ may be provided with means for varying the centre distance between the first and the second support means, so as to realise a radially extendible assembly.

Further characteristics and advantages of the invention will appear clearly from the following description of a non limiting embodiment of the invention given with reference to the figures in the enclosed drawings, in which:
- figure 1 illustrates a longitudinal view in elevation of a mechanical component, in this particular case a silencer for an exhaust system of a motor vehicle engine with the respective feeding and discharge pipes, and a schematic view of the work position of respective welding torches for the component itself;
- figure 2 illustrates on an enlarged scale the component in figure 1 while it is being processed using the device according to the invention;
- figure 3 illustrates on a more enlarged scale a detail in figure 2; and
- figure 4 illustrates on an enlarged scale an orthogonal view from one side of the device in figure 2.

With reference to the figures from 1 to 4, the reference 1 indicates the whole of a device for carrying out a synchronised relative rotation between a mechanical component 2 and tools 3, 4 for processing component 2 around at least one first axis A and one second axis B, parallel to each other and eccentric, of the mechanical component 2 itself.

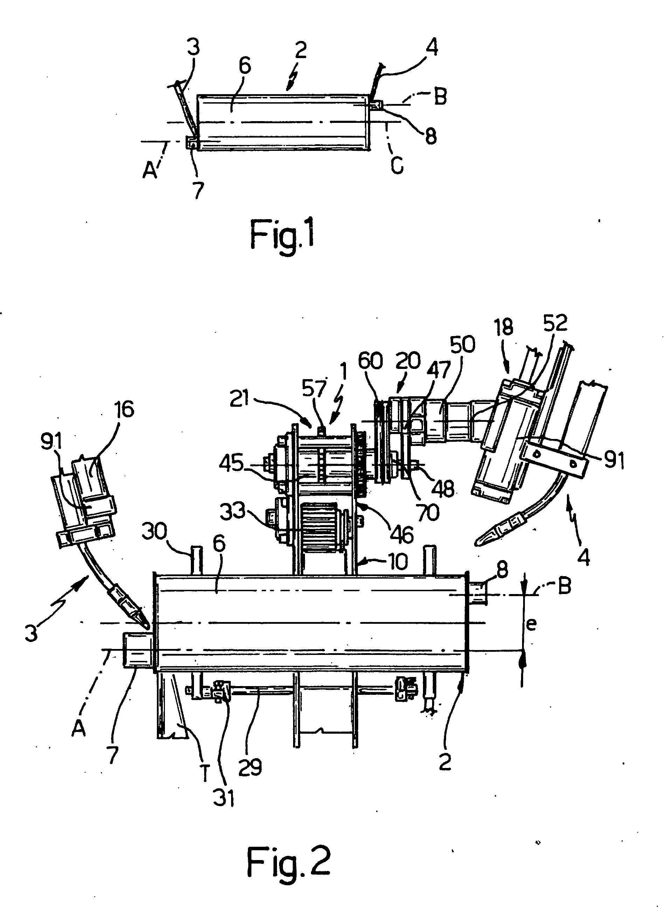

According to the illustrated non limiting embodiment of the invention, the mechanical component 2 is a silencer of an engine exhaust system (known and not illustrated for the sake of simplicity) and the device 1, in use, rotates welding torches 3, 4 with respect to the silencer 2, in particular respect to a tubular shaped casing 6 of the silencer 2, having an axis of symmetry C (figure 1), on which casing must be butt welded respective pipes 7, 8 in correspondence of axis A and axis B, respectively, both axes A,B being eccentric and offset with respect to the axis C and parallel to axis C itself.

With respect to the description that will follow, axis A may also be coaxial with axis C, the only thing that matters is that between the axis A and B there is an eccentricity "e" that constitutes the centre distance between the same (figure 2). As it will be made clear by the following description, the component 2 could also provide several pipes 7, 8 offset to each other which may be advantageously welded to the casing 6 all at the same time in the manner that will be explained.

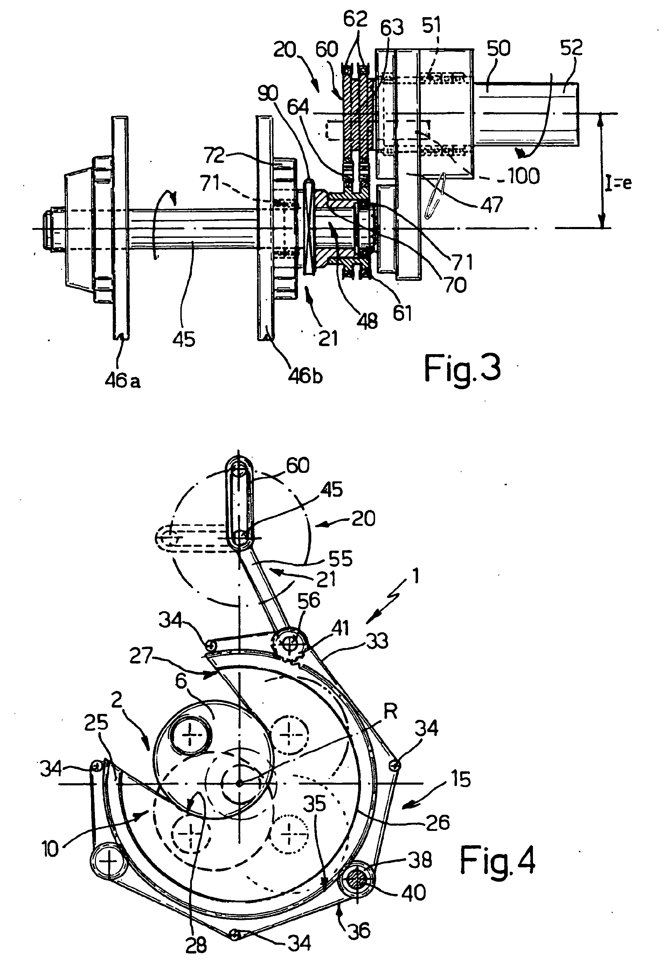

The device 1 comprises a support cradle 10 with axial symmetry for the mechanical component 2, which is circumferentially open (figure 4) and in which, owing to the particular conformation of the cradle 10, the mechanical component can be set radially from the outside with, for example, the axis A (which of course could be the axis B, as long as the axes A and B are substituted wherever they are mentioned below) coaxial with an axis of rotation R (figure 4) of the cradle 10.

The cradle 10 is supported rotating around the axis R, which is also its axis of symmetry, in any conventional way, for example with a support structure T (figure 2).

The device 1 also comprises means, indicated overall with 15 (figure 4), for rotating the cradle 10 around its axis of rotation R for at least 360° (or multiples or fractions of multiples of 360°), support means 16 for the tool 3 and support means 18 for the tool 4. The support means 16 are suited to keep the tool 3 at a first predetermined radial distance from the axis A and the support means 18 are likewise suited to keep the second tool 4 and a second predetermined radial distance from the axis B.

In the particular case described, the first predetermined distance corresponds substantially to the radius of the pipe 7, while the second predetermined distance corresponds substantially to the radius of the pipe 8.

The device 1 also comprises means, indicated overall with 20, for rotating the support means 18 around the axis B, along a circumference having as radius the above-mentioned second radial distance, that is the radius of the pipe 8; and transmission means indicated overall with 21, for transmitting a synchronised movement of rotation from the means 15 for rotating the cradle 10 to the means 21 for rotating the support means 18.

According to the illustrated non limiting example, the means 15 for rotating the cradle 10 comprise a toothed wheel 25 (figure 4), with external toothing held angularly integral by the cradle 10, on an external side wall with cylindrical geometry 26; the toothed wheel 25 is interrupted along a circumferential stretch of a predetermined width, so as to defines a radial opening 27 (figure 4) of the cradle 10 for inserting the mechanical component 2 (in this case, the casing 6) in a support seat 28 of the cradle 10, substantially shaped like a horse shoe in cross section and moreover delimited by a plurality of bars 29 (figure 2) equipped with idle rollers 31 supported by a structure 30.

A transmission belt 33 with internal and external toothing (or another equivalent transmission organ, for example a chain with reversible engagement) is held around the cradle 10 by a plurality of driving gears 34 (figure 4) in such a way as to define a closed path with a substantially arched shape having an intrados branch 35 engaging on its own outside with the toothed wheel 25 and an extrados branch 36 engaging on its own inside with at least one first pinion 38, which is motor-driven, for example it is connected by a motor shaft 40 in a conventional way with an electric motor not illustrated.

The transmission organ 33 is wound onto driving gears 34 to form the above-mentioned closed path defined between braches 35 and 36 so as to leave the radial opening 27 of the cradle 10 completely free and, therefore, not interfere in any way with the insertion/extraction of the mechanical component 2 in/from the seat 28.

The intrados branch 35 of the transmission organ 33 engages, on its own inside, also with the pinion 38, on the side of the pinion opposite the extrados side 36 of organ 33; the pinion 38 is therefore located circumferentially on the outside of the cradle 10, between the extrados 36 and intrados 35 branches, in a first defined angular position, preferably located under the cradle 10 and shifted laterally with respect to the axis R, on the side opposite the opening 27. The seat 28 and the relative opening 27 are also preferably oriented obliquely with respect to the horizontal plane, in a direction diametrically opposite the pinion 38.

Between the intrados 35 and extrados 36 branches is also located a second pinion 41, not motor-driven, engaging with both the branches 35, 36 or with the toothed wheel 25, for example respectively on the outside of the intrados branch 35 and on the inside of the extrados branch 36, located circumferentially on the outside of the cradle 10, in a second defined angular position, preferably situated above the cradle 10 and shifted laterally with respect to the axis R, on the same side as the pinion 38, but of a smaller quantity, for example about one half of the shifting of pinion 38.

In any case, both pinions 38 and 41 are situated outside the bulk of the opening 27.

With particular reference to figure 3, the means 20 for rotating the support means 18 around the axis B comprise a first shaft 45 supported idle in a fixed angular position located radially on the outside of the cradle 10, at a predetermined distance from its axis of rotation R, in this particular case in correspondence with the vertical line passing through the axis R, for example by a conventional support structure 46 obtained integral with the support structure T of the cradle 10.

A crank 47 with a predetermined length is held angularly integral and radially projecting at a first end 48 of the shaft 45, which extends axially projecting from a pair of supports 46a, 46b (figure 3) for the shaft 45 itself; a second shaft 50, parallel to the shaft 45, is supported idle by the crank 47, for example by means of rolling bearings 51, on the side opposite the shaft 45, and extends axially projecting from the crank 47, on the side opposite the pair of supports 46a, 46b, so that one of its free ends 52 is suited to receive angularly integral, conventionally anchored to it, the support means 18 for the tool 4.

According to a fundamental aspect of the invention, the predetermined length of the crank 47 is chosen in such a way that the centre distance I (figure 3) between the shafts 45 and 50 is equal to the eccentricity "e" between the axes A and B.

The means 21 for transmitting a synchronised movement of rotation from the means 15 for rotating the cradle 10 to the means 20 for rotating the support means 18 comprise the pinion 41 and a first transmission cascade 55. This is composed for example of a continuous transmission organ, such as a toothed belt or chain, wound on opposite gears 56, angularly integral with the pinion 41 and held alongside it, and 57 - figure 2 - keyed onto the shaft 45 between the supports 46a,46b. In this way the transmission cascade 55 connects the pinion 41 with the shaft 45, to make the latter rotate as a consequence of the rotation of the toothed wheel 25 under the action of the motor-driven pinion 38.

The transmission means 21 also comprise, according to the non limiting embodiment illustrated, a sleeve 70 (figure 2) passed through idle (for example by means of bearings 71) by the end 48 of the shaft 45, with respect to which the sleeve 70 is supported coaxially, but in a fixed angular position, by the support 46b, to which it is anchored integrally, for example with a connecting device 72.

A second transmission cascade 60 connects the sleeve 70 to the shaft 50 with a 1:1 transmission ratio. The transmission cascade 60 is preferably made in such a way as to be held integral by the crank 47 and comprises a pair of toothed pinions 61 which are keyed in axis onto an end of the sleeve 70 adjacent to the crank 47, a pair of identical pinions 62 keyed integral onto the shaft 50, at an end 63 of the same which passes through the crank 47 protruding from the side that faces the supports 46a,46b, and a chain 64 (or another similar transmission organ) which winds with a closed path around the pinions 61,62.

In this way the shaft 50 is rotated around its own axis in a first predetermined direction (indicated by the arrow in figure 3), while the shaft 45 rotates, together with the crank 47 angularly anchored integral to it, around its own axis in a second predetermined direction, opposite the first, also indicated by the arrow in figure 3.

Consequently, the shaft 50, with its free end 52, is subject to a combined rotation movement around its own axis of rotation and around the axis of the shaft 45; in fact, when the shaft 45 is rotated by the transmission cascade 55, it drags in rotation the crank 47, to which the transmission cascade 60 is anchored; nevertheless, the sleeve 70 with the pinions 61 cannot rotate, as it is anchored fixed to the support 46b; consequently, the rotation movement of the crank 47 induces through the chain 64 a movement of rotation in the opposite direction on the pinions 62 which, thus, can drag in rotation the shaft 50.

The consequence of what has been described is that, when a component 2 is set on the cradle 10, rotating the cradle 10 makes also the peripheral edge of the pipe 7 to rotate in front of the fixed torch 3, which therefore proceeds to weld the pipe 7 onto the casing 6; at the same time, the pipe 8, which rotates eccentric with respect to the axis R (which axis R coincides with the axis A of the pipe 7) together with the casing 6, is "followed" by the torch 4 held by the end 52 of the shaft 50; the torch 4 is in fact guided by the combined movement of the shaft 50 to follow the peripheral edge of the pipe 8 in its rotation on the cradle 10 together with the casing 6 and, at the same time, it is rotated around the pipe 8, along its above-mentioned peripheral edge, to make the weld.

In the case where the device 1 has to weld a component 2 in which the distance "e" between the two pipes 7, 8 is different, it will be sufficient to replace the crank 47 with another one of a different length, so as to adapt the centre distance I.

For this purpose the crank 47 is angularly connected integral to the end 48 of the shaft 45 by means of a quick connecting device 90 (schematically indicated with a block in figure 3), so as to be able to replace rapidly the group composed of the crank 47 and of the respective transmission cascade 60 with another of different dimensions.

Obviously, such a device 90 must also contemplate the axial subdivision of the sleeve 70 in two semi-elements, one which remains anchored fixed to the support 46b and engaged through idle by the shaft 45 and the other which remains supported idle by the crank 47 and which holds the pinions 61.

Alternatively, it is also possible to provide a device 100 for regulating the radial length of the assembly formed by the crank 47 and the transmission cascade 60, which, in this case, need not be replaced each time component 2 is changed, but only adjusted; for example, this device 100 may comprise a crank 47 realised as a radially extendible element, for example comprising two elements sliding reciprocally in a radial direction and equipped with a device for blocking it in a plurality of different relative radial positions and, at the same time, the transmission cascade 60 will be equipped with any known device for regulating the length of the chain 64.

Lastly, the above-mentioned support means 16,18 both comprise respective mobile slides suited to vary said first and second predetermined radial distance of the tools 3, 4 from the axes A and B, so as to be able to adapt the device 1 easily to perform the processing of components 2 having pipes 7, 8 with a different diameter (radius).

## Claims

1. Device (1) for carrying out a synchronised relative rotation between a mechanical component (2) and tools(3,4) for processing the same around at least one first axis (A) and one second axis(B), parallel and eccentric to each other, of the mechanical component (2), in particular for the rotation of welding torches (3,4) with respect to a silencer(2) of an exhaust system of a vehicle engine for the butt welding of respective pipes (7,8), each in correspondence with one of said axes(A,B), to a casing (6) of the silencer (2); the device (1) comprising:
- a support cradle (10) with axial symmetry for the mechanical component (2), within which the mechanical component (2) can be set, with its first axis (A) coaxial with an axis of rotation (R) of the cradle (10);
- means (15) for rotating the cradle (10) around its axis of rotation (R) by at least 360°;
- first support means (16) for a first tool (3) suited to keep the first tool (3) at a first radial distance from the first axis (A) and second support means (18) for a second tool (4) suited to keep the second tool (4) at a second radial distance from the second axis(B); **characterised in that** the device further comprises:
- means (20) for rotating said second support means (18) around the second axis (B), along a circumference having as its radius said second radial distance; and
- transmission means (21) for transmitting a synchronised movement of rotation from the means (15) for rotating the cradle(10) to the means (21) for rotating the second support means (18).

2. Device according to claim 1, **characterised in that** said support cradle (10) is circumferentially open, so that said mechanical component (2) can be set in it radially from the outside; said means (15) for rotating the cradle(10) then comprising a toothed wheel (25) with external toothing held angularly integral by said cradle(10), said toothed wheel being interrupted along a circumferential stretch of a predetermined width so as to define a radial opening (27) of the cradle for inserting said mechanical component (2) in a support seat (28) of the cradle(10); and a transmission belt or chain (33) with internal and external toothing held around said cradle (10) by a plurality of driving gears (34) in such a way as to define a closed path with a substantially arched shape having an intrados branch (35) engaging on its own outside with said toothed wheel (25) and an extrados branch (36) engaging on its own inside, with at least one first pinion (38), which is motor-driven; said transmission belt or chain (33) leaving said radial opening (27) of the cradle (10) completely free.

3. Device according to claim 2, **characterised in that** said intrados branch (35) of the toothed belt or chain (33) engages, on its own inside, also with said first pinion (38), which is located circumferentially on the outside of the cradle (10), between said extrados (36) and intrados (35) branches, in a first defined angular position, preferably under said cradle (10).

4. Device according to claim 2 or 3, **characterised in that** between said intrados and extrados branches (36,35) it is located a second pinion (41), not motor-driven, the second pinion (41) engaging with said branches (36,35), respectively on the outside of the intrados branch (35) and on the inside of the extrados (36) branch, the second pinion (41) being located circumferentially on the outside of the cradle (10), in a second defined angular position, preferably situated above said cradle (10).

5. Device according to claim 4, **characterised in that** both said first and second pinions (38,41) are situated outside the bulk of said opening (27).

6. Device according to one of the claims from 2 to 5, **characterised in that** the means (20) for rotating said second support means (18) around the second axis(B) comprise a first shaft (45) supported idle in an fixed angular position radially on the outside of the cradle (10), at a predetermined distance from its axis (R) of rotation; a crank (47) with a predetermined length held angularly integral and radially projecting at a first end (48) of said first shaft (45), extending axially projecting from a pair of supports (46a,46b) for the first shaft (45); and a second shaft (50), parallel to the first (45), supported idle by said crank (47), on the side opposite the first shaft (45); the second shaft (50) extending axially projecting from the crank (47), on the side opposite the pair of supports (46a,46b) of the first shaft (45); said predetermined length of said cranck (47) being such that the centre distance between said first (45) and second (50) shaft is equal to the eccentricity (e) between said first (A) and second (B) axis.

7. Device according to claim 6, **characterised in that** said transmission means (21) for transmitting a synchronised movement of rotation from the means (15) for rotating the cradle(10) to the means (20) for rotating the second support means (18) comprise: said second pinion (41); a first transmission cascade (55) which connects said second pinion (41) to said first shaft (45), to rotate the following as a consequence of the rotation of said toothed wheel (25) under the thrust of said first pinion (38); a sleeve (70) engaged idle by said first shaft (45), with respect to which is it supported coaxial but in a fixed angular position, and a second transmission cascade (60) which connects said sleeve(70) to said second shaft (50) with a 1:1 transmission ratio to rotate the second shaft (50) around its own axis in a first predetermined direction, while the second shaft (50) rotates, together with said crank (47), around the axis of the first shaft (45) in a second predetermined direction, opposite the first.

8. Device according to claim 7, **characterised in that** said second transmission cascade (60) is held integral by said crank (47).

9. Device according to claim 8, **characterised in that** between said crank (47) and said first shaft(45) there is a quick coupling device (90), so as to be able to replace rapidly the group composed of the crank (47) and of the respective second transmission cascade (60).

10. Device according to any one of the previous claims, **characterised in that** said first and second support means (16,18) comprise mobile slides for varying said first and second predetermined radial distance of said first and second tool (3,4) from said first and second axis (A,B).

## Patentansprüche

1. Vorrichtung zur Erzeugung einer synchronisierten relativen Drehbewegung zwischen einem mechanischen Bauteil (2) und Werkzeugen (3, 4) zur Durchführung von Bearbeitungsvorgängen mittels der Werkzeuge entlang wenigstens einer ersten und einer zweiten parallel und exzentrisch zueinander verlaufenden Achse (A, B) des mechanischen Bauteils (2), insbesondere zur Erzeugung der Drehbewegung von Schweißbrennern (3, 4) relativ zu einem Schalldämpfer (2) für Abgas-Systeme von Kraftfahrzeug-Antriebsmotoren zur Stumpfschweißung von zugeordneten Rohren (7, 8) in Zuordnung zu jeweils einer der Achsen (A, B) auf dem Gehäuse (6) des Schalldämpfers (2), wobei die Vorrichtung
- einen bezüglich des mechanischen Bauteils (2) axialsymmetrischen Halterungskäfig (10), in welchem der mechanische Bauteil (2) mit seiner ersten Achse (A) koaxial zu einer Drehachse (R) des Käfigs (10) einsetzbar ist,
- Mittel (15) für den Drehantrieb des Käfigs (10) um dessen Drehachse um wenigstens 360 °, und
- erste Halterungsmittel (16) für ein erstes Werkzeug (3), welches zur Aufnahme des ersten Werkzeugs (3) in einem ersten radialen Abstand von der ersten Achse (A) geeignet und zweite Halterungsmittel (18) für ein zweites Werkzeug (4), welches zur Aufnahme des zweiten Werkzeugs (4) in einem zweiten radialen Abstand zu der zweiten Achse (B) geeignet ausgebildet sind, aufweist,
**dadurch gekennzeichnet,**
**dass** die Vorrichtung außerdem
- Mittel (20) für den Drehantrieb der Halterungsmittel (18) um die zweite Achse (B) entlang einer Umfangsbahn mit dem Radius des zweiten radialen Abstands und
- Übertragungsmittel (21) zur Übertragung einer synchronisierten Drehbewegung von den Mittel (15) für den Drehantrieb des Käfigs (10) auf die Übertragungsmittel (21) zur Übertragung einer synchronisierten Drehbewegung von den Mitteln (15) für den Drehantrieb des Käfigs (10) für den Drehantrieb der zweiten Halterungsmittel (18), aufweist.

2. Vorrichtung nach Anspruch 1, **dadurch gekennzeichnet, dass** der Halterungskäfig (10) in Umfangsrichtung offen ist, so dass der mechanische Bauteil (2) von der Außenseite aus einführbar ist; dass besagte Mittel (15) für den Drehantrieb des Käfigs (10) ein mit einer Verzahnung versehenes, zur Bildung einer radialen Öffnung (27) im Käfig zum Einführen des mechanischen Bauteils (2) in eine Halterungsaufnahme (28) des Käfigs (10) entlang einer Umfangserstreckung von vorgegebener Breite unterbrochenes, mit dem Käfig winkelfest verbunden Rad und ein(e) Übertragungsriemen oder -kette (33) mit einer inneren und einer äußeren Verzahnung mittels einer Anzahl von Antriebsräder (34) derart um den Halterungskäfig (10) herumgeführt angeordnet ist, dass eine im Wesentlichen bogenförmige geschlossene Bahn mit einem inneren Zweig (35), welcher mit seiner eigenen Außenseite mit dem verzahnten Rad (25) kämmt, und einem äußeren Zweig (36) gebildet wird, welcher mit seiner eigenen Innenseite mit wenigstens einem ersten motorisch angetriebenen Ritzel (38) kämmt, wobei der Übertragungsriemen, bzw. die Übertragungskette (33) die radiale Öffnung (27) des Übertragungskäfig (10) vollständig freigibt.

3. Vorrichtung nach Anspruch 2, **dadurch gekennzeichnet, dass** die innere Bogenfläche (35) des mit der Verzahnung versehenen Riemens bzw. der Kette (33) auf ihrer eigenen Innenseite auch mit dem besagten ersten Ritzel (38) kämmt, welches in einer vorgegebenen Winkelposition, vorzugsweise unter dem Käfig (10) zwischen der äußeren (36) und der inneren Bogenfläche (35) auf der Außenseite des Umfangs des Käfigs (10) angeordnet ist.

4. Vorrichtung nach Anspruch 2 oder 3, **dadurch gekennzeichnet, dass** zwischen den besagten inneren und äußeren Zweigen (36, 35) ein zweites nicht motorgetriebenes Ritzel (41) angeordnet ist, welches mit besagten Zweigen (36, 35) jeweils auf der Außenseite des inneren Zweigs (35) bzw. auf der Innenseite des äußeren Zweigs (35) kämmt, wobei das zweite Ritzel (41) auf der Außenseite des Umfangs des Käfigs (10) in einer zweiten vorgegebenen Winkelposition, vorzugsweise oberhalb des Käfigs (10) angeordnet ist.

5. Vorrichtung nach Anspruch 4, **dadurch gekennzeichnet**, das sowohl das erste als auch das zweite Ritzel (38, 41) außerhalb des Bereichs der Öffnung (27) angeordnet ist.

6. Vorrichtung nach einem der Ansprüche 2 bis 5, **dadurch gekennzeichnet, dass** die Mittel (20) für den Drehantrieb der zweiten Halterungsmittel (18) um die zweite Achse (B) eine frei drehbar in einer vorgegebenen Winkelposition radial auf der Außenseite des Käfigs (10) in vorgegebenem Abstand von ihrer Drehachse (R) vorgesehene erste Welle (45) aufweisen; dass eine Kurbel (47) vorgegebener Länge winkelfest und radial von einem ersten Ende (48) der besagten ersten Welle (45) gehalten ist, die ihrerseits axial von einem Paar von Trägern (46a, 46b) für die erste Welle (45) vortritt; und dass eine zweite Welle (50) parallel zur ersten (45) frei drehbar von der Kurbel (47) auf der der ersten Welle (45) gegenüberliegenden Seite gehaltert ist; wobei die zweite Welle (50) auf der dem Paar von Trägern (46a, 46b) der ersten Welle (45) gegenüberliegenden Seite axial von der Kurbel (47) vortritt und die vorgegebene Länge der Kurbel (47) so gewählt ist, dass zwischen den Mittellinien der ersten (45) und der zweiten Welle (50) gemessene Abstand gleich der Exzentrizität (e) zwischen der ersten (A) und der zweiten Achse (B) ist.

7. Vorrichtung nach Anspruch 6, **dadurch gekennzeichnet, dass** die Übertragungsmittel (21 ) zur Übertragung einer synchronisierten Drehbewegung von den Mitteln (15) für den Drehantrieb des Käfigs (10) auf die Mittel (20) zum Drehantrieb der zweiten Halterungsmittel (18) besagtes zweites Ritzel (41), einen ersten Übertragungszug (55) aufweisen, welcher das besagte zweite Ritzel (41) mit der ersten Welle (45) verbindet, um dieses in Folge der Drehung des besagten zweiten Rads (25) aufgrund der Antriebskraft des ersten Ritzels (38) in Drehung zu versetzen; und dass eine frei drehbar auf und relativ zu ihr koaxial in fester Winkelausrichtung auf der ersten Welle (45) gehalterte Hülse (70) und ein zweiter Übertragungszug (60) vorgesehen sind, welcher die besagte die erste Hülse (70) mit der zweiten Welle (50) mit einem Übersetzungsverhältnis von 1 : 1 in einer vorgegebenen ersten Drehrichtung verbindet, während die zweite Welle (50) zusammen mit der Kurbel (47) in einer der ersten Drehrichtung entgegengesetzten zweiten vorgegebenen Drehrichtung um die Achse der ersten Welle (45) drehangetrieben ist.

8. Vorrichtung nach Anspruch 7, **dadurch gekennzeichnet, dass** der zweite Übertragungszug (60) integral mit der besagten Kurbel (47) verbunden ist.

9. Vorrichtung nach Anspruch 8, **dadurch gekennzeichnet, dass** zwischen der Kurbel (47) und der ersten Welle (45) eine Schnellkupplungs-Einrichtung (90) vorgesehen ist, so dass die von der Kurbel (47) und dem zugeordneten zweiten Übertragungszug (70) gebildete Baugruppe schnell austauschbar ist.

10. Vorrichtung nach einem der vorhergehenden Ansprüche, **dadurch gekennzeichnet, dass** die ersten und zweiten Halterungsmittel (16, 18) verschiebliche Schlitten zur Veränderung der ersten und zweiten vorgegebenen radialen Entfernung des ersten und zweiten Werkzeugs (3, 4) von der ersten und der zweiten Achse (A, B) aufweisen.

## Revendications

1. Dispositif (1) pour effectuer une rotation relative synchronisée entre une pièce mécanique (2) et des outils (3, 4) pour traiter celle-ci autour d'au moins un premier axe (A) et un second axe (B), parallèles et excentriques l'un par rapport à l'autre, de la pièce mécanique (2), en particulier pour la rotation de chalumeaux soudeurs (3, 4) par rapport à un pot d'échappement (2) d'un système d'échappement d'un moteur de véhicule pour le soudage bout à bout de tuyaux respectifs (7, 8), chacun étant en correspondance avec l'un desdits axes (A, B), à une enveloppe (6) du pot d'échappement (2) ; le dispositif (1) comprenant :
- un berceau-support (10) avec une symétrie axiale pour la pièce mécanique (2), dans lequel la pièce mécanique (2) peut être installée, son premier axe (A) étant coaxial à un axe de rotation (R) du berceau (10) ;
- un moyen (15) de faire pivoter le berceau (10) autour de son axe de rotation (R) d'au moins 360° ;
- un premier moyen de support (16) pour un premier outil (3) adapté de manière à tenir le premier outil (3) à une première distance radiale du premier axe (A) et un second moyen de support (18) pour un second outil (4) adapté de manière à tenir le second outil (4) à une seconde distance radiale du second axe (B) ; **caractérisé en ce que** le dispositif comprend en outre :
- un moyen (20) de faire pivoter ledit second moyen de support (18) autour du second axe (B), le long d'une circonférence ayant pour rayon ladite seconde distance radiale ; et
- un moyen de transmission (21) pour transmettre un mouvement synchronisé de rotation depuis le moyen (15) de faire pivoter le berceau (10) jusqu'au moyen (21) de faire pivoter le second moyen de support (18).

2. Dispositif selon la revendication 1, **caractérisé en ce que** ledit berceau-support (10) est ouvert de manière circonférentielle, de sorte que ladite pièce mécanique (2) peut être installée à l'intérieur de manière radiale depuis l'extérieur ; ledit moyen (15) de faire pivoter le berceau (10) comprenant ensuite une roue dentée (25), dont la dentelure externe est maintenue angulairement intégrale par ledit berceau (10), ladite roue dentée étant interrompue le long d'une étendue circonférentielle d'une largeur prédéterminée de manière à définir une ouverture radiale (27) du berceau pour insérer ladite pièce mécanique (2) dans un siège de support (28) du berceau (10) ; et une courroie ou chaîne de transmission (33) avec une dentelure interne et externe maintenue autour dudit berceau (10) par une pluralité de pignons de commande (34) de manière à définir un chemin fermé avec une forme substantiellement arquée ayant une branche d'intrados (35) venant en prise sur son propre côté externe avec ladite roue dentée (25) et une branche d'extrados (36) venant en prise sur son propre côté interne, avec au moins un premier pignon (38) entraîné par un moteur ; ladite courroie ou chaîne de transmission (33) quittant ladite ouverture radiale (27) du berceau (10) complètement libre.

3. Dispositif selon la revendication 2, **caractérisé en ce que** ladite branche d'intrados (35) de la courroie ou chaîne dentée (33) vient en prise, sur son propre côté interne, également avec ledit premier pignon (38), situé de manière circonférentielle sur l'extérieur du berceau (10), entre lesdites branches d'extrados (36) et d'intrados (35), dans une première position angulaire définie, de préférence sous ledit berceau (10).

4. Dispositif selon la revendication 2 ou 3, **caractérisé en ce qu'**entre lesdites branches d'intrados et d'extrados (36, 35), un second pignon (41) est situé, non entraîné par un moteur, le second pignon (41) venant en prise avec lesdites branches (36, 35), respectivement sur l'extérieur de la branche d'intrados (35) et sur l'intérieur de la branche d'extrados (36), le second pignon (41) étant situé de manière circonférentielle sur l'extérieur du berceau (10), dans une seconde position angulaire définie, de préférence située au-dessus dudit berceau (10).

5. Dispositif selon la revendication 4, **caractérisé en ce que** lesdits deux premier et second pignons (38, 41) sont situés à l'extérieur du volume de ladite ouverture (27).

6. Dispositif selon l'une des revendications 2 à 5, **caractérisé en ce que** le moyen (20) de faire pivoter ledit second moyen de support (18) autour du second axe (B) comprend un premier arbre (45) supporté à l'arrêt dans une position angulaire fixe de manière radiale sur l'extérieur du berceau (10), à une distance prédéterminée de son axe (R) de rotation ; un bras de manivelle (47) avec une longueur prédéterminée maintenu angulairement intégral et faisant saillie de manière radiale au niveau d'une première extrémité (48) dudit premier arbre (45), s'étendant de manière axiale en faisant saillie depuis une paire de supports (46a, 46b) pour le premier arbre (45) ; et un second arbre (50), parallèle au premier (45), supporté à l'arrêt par ledit bras de manivelle (47), sur le côté opposé au premier arbre (45) ; le second arbre (50) s'étendant de manière axiale en faisant saillie depuis le bras de manivelle (47), sur le côté opposé à la paire de supports (46a, 46b) du premier arbre (45) ; ladite longueur prédéterminée dudit bras de manivelle (47) étant telle que la distance centrale entre ledit premier (45) et ledit second (50) arbre est égale à l'excentricité (e) entre ledit premier (A) et ledit second (B) axe.

7. Dispositif selon la revendication 6, **caractérisé en ce que** ledit moyen de transmission (21) pour transmettre un mouvement de rotation synchronisé depuis le moyen (15) de faire pivoter le berceau (10) jusqu'au moyen (20) de faire pivoter le second moyen de support (18) comprend :
ledit second pignon (41) : une première cascade de transmission (55) qui connecte ledit second pignon (41) au dit premier arbre (45), pour faire pivoter le suivant suite à la rotation de ladite roue dentée (25) sous la poussée axiale dudit premier pignon (38) ; un manchon (70) engagé à l'arrêt avec ledit premier arbre (45), relativement auquel il est supporté de manière à être coaxial mais dans une position angulaire fixe, et une seconde cascade de transmission (60) qui connecte ledit manchon (70) au dit second arbre (50) avec un rapport de transmission de 1:1 pour faire pivoter le second arbre (50) autour de son axe propre dans une première direction prédéterminée, alors que le second arbre (50) pivote, avec ledit bras de manivelle (47), autour de l'axe du premier arbre (45) dans une seconde direction prédéterminée opposée à la première.

8. Dispositif selon la revendication 7, **caractérisé en ce que** ladite seconde cascade de transmission (60) est maintenue intégrale par ledit bras de manivelle (47).

9. Dispositif selon la revendication 8, **caractérisé en ce qu'**entre ledit bras de manivelle (47) et ledit premier arbre (45), il y a un dispositif d'accouplement rapide (90), de manière à être capable de remplacer rapidement le groupe composé du bras de manivelle (47) et de la seconde cascade de transmission respective (60).

10. Dispositif selon l'une quelconque des revendications précédentes, **caractérisé en ce que** ledit premier et ledit second moyen de support (16, 18) comprend des glissières mobiles pour faire varier ladite première et seconde distance radiale prédéterminée dudit premier et second outil (3, 4) depuis ledit premier et second axe (A, B).
